# FASCICULE DE BREVET EUROPEEN

(11) **EP 3 478 529 B1**
(45) Date de publication et mention de la délivrance du brevet: **29.04.2020**
(21) Numéro de dépôt: 17720190.2
(22) Date de dépôt: 30.03.2017
(51) Int. Cl.: B60L 50/16

(54) **PROCÉDÉ ET DISPOSITIF DE CONTRÔLE DE LA PUISSANCE DISPONIBLE SUR UNE CHAÎNE DE TRACTION ÉLECTRIQUE D'UN GROUPE MOTOPROPULSEUR HYBRIDE**
VERFAHREN UND VORRICHTUNG ZUR STEUERUNG DER AUF EINER ELEKTRISCHEN TRAKTIONSKETTE EINES HYBRIDANTRIEBSSTRANGS VERFÜGBARE LEISTUNG
METHOD AND APPARATUS FOR CONTROLLING THE AVAILABLE POWER ON THE POWERTRAIN OF AN HYBRID VEHICLE

(30) Priorité: 30.06.2016 FR 1656202
(43) Date de publication de la demande: 08.05.2019
(73) Titulaire: Renault S.A.S., 92100 Boulogne-Billancourt (FR); Nissan Motor Co., Ltd., Yokohama-shi, Kanagawa 221-0023 (JP)
(72) Inventeur: KETFI-CHERIF, Ahmed, 78990 Elancourt (FR); MERIENNE, Ludovic, 91190 Gif-Sur-Yvette (FR); LE MAO, Loïc, 92100 Boulogne-Billancourt (FR)
(74) Mandataire: Rougemont, Bernard
(86) Numéro de dépôt international: PCT/FR2017/050733
(87) Numéro de publication internationale: WO 2018/002458

(56) Documents cités:
- WO-A2-2014/207332
- US-A1- 2004 147 365
- US-A1- 2013 200 696
- US-A1- 2015 231 977

## Description

La présente invention concerne le contrôle de la puissance disponible sur la chaîne de traction électrique d'un véhicule hybride.

Plus précisément, elle a pour objet un procédé de contrôle de la puissance disponible sur la chaîne de traction électrique d'un groupe motopropulseur composé d'un moteur thermique qui peut transmettre son couple aux roues sur différents rapports de transmission, d'une première machine électrique d'une deuxième machine électrique reliée alternativement aux arbres d'entrée du moteur thermique ou de la première machine électrique dans le groupe motopropulseur, et d'une batterie d'alimentation des machines électriques.

La publication WO 2014/207332 décrit une transmission hybride de ce type, disposant de plusieurs rapports, électriques, thermiques et hybrides, où les couples du moteur thermique et d'au moins une machine électrique s'additionnent en direction des roues. Le couple d'origine thermique est transmis aux roues sur un rapport de transmission « thermique », et le couple de traction de la machine électrique principale sur un rapport « électrique ». Lors de changements de rapport de transmission thermique en mode hybride (cumul des tractions thermique et électrique), le couple du moteur thermique est interrompu. Le couple de la machine électrique secondaire est alors piloté pour synchroniser le moteur thermique sur son nouveau rapport, tout en fournissant du couple à la roue par la machine électrique principale.

Dans la pratique, l'architecture électrique du véhicule, en particulier la puissance disponible sur la machine électrique principale, limite l'apport de celle-ci. Pour conserver une traction purement électrique jusqu'à des vitesses relativement élevées, par exemple jusqu'à 80 km/h, on est limité par le niveau de tension de la batterie. La tension est souvent trop faible, même à pleine charge, pour développer toute la puissance électrique de traction souhaitée. Le phénomène s'aggrave avec la baisse de l'état de charge. Lorsque les puissances des deux machines électriques peuvent se cumuler, les performances de la chaîne de traction électrique restent insuffisantes, malgré l'apport de puissance de la machine électrique secondaire, qui est limité par le niveau de tension.

Par ailleurs, si l'interruption du couple thermique est peu compensée pendant les changements de rapport thermique, le conducteur et les passagers du véhicule, ressentent ces passages, comme ceux d'une boîte de vitesse robotisée à rupture de couple.

Il est donc souhaitable d'améliorer les performances de la chaîne de traction électrique, notamment sur les véhicules hybrides non rechargeables, pour disposer d'une puissance plus élevée en roulage électrique pur, et pour estomper la rupture de couple ressentie pendant les changements de rapport sur la chaîne de traction thermique.

La présente invention vise à augmenter la puissance disponible, afin d'élever la vitesse accessible en roulage électrique, et d'estomper le trou de puissance pendant les changements de rapport de transmission thermique.

Dans ce but, elle propose que la tension d'alimentation des machines électriques soit établie par un convertisseur de tension[ML1] continue, disposé entre les bornes de la batterie et celles des machines électriques, capable de leur imposer une tension égale à celle de la batterie, ou bien une tension plus élevée que celle-ci.

Cette mesure permet d'augmenter la puissance disponible sur la chaîne de traction électrique, notamment à haute vitesse.

Dans un mode de réalisation particulier de l'invention, le convertisseur de tension impose aux machines électriques la tension de la batterie, quand la demande d'accélération du conducteur au travers de sa pédale d'accélérateur reste faible, et leur impose une tension plus élevée que celle-ci, quand le conducteur demande une forte accélération.

Le convertisseur de tension [ML2] continue, qui est disposé entre les bornes de la batterie et celles des machines électriques, est capable d'imposer, selon des conditions requises, une tension égale à celle de la batterie, ou bien une tension plus élevée que celle-ci.

La présente invention permet de résoudre simultanément les deux problèmes techniques cités, qui sont rencontrés par exemple sur un groupe motopropulseur hybride motopropulseur non rechargeable sur le réseau électrique au sol, avec une tension de bord de l'ordre de 200 V, et une capacité relativement faible, de quelques centaines de Wh.

Cette inventiontrouve une application privilégiée sur un GMP composé d'un moteur thermique relié à un premier arbre d'entrée de boîte de vitesses qui peut transmettre son couple aux roues sur différents rapports de transmission, d'une première machine électrique reliée à un deuxième arbre d'entrée de celle-ci, et d'une deuxième machine électrique reliée alternativement au premier ou au deuxième arbre d'entrée de la boîte.

Elle sera mieux comprise à la lecture de la description suivante d'un mode de réalisation particulier de celle-ci, en se reportant aux dessins annexés sur lesquels :
- la figure 1 est un schéma d'architecture hybride,
- la figure 2 regroupe ses courbes de passage,
- la figure 3 identifie les rapports demandés par rapport à ces courbes,
- la figure 4, est un schéma simplifié du circuit des machines électriques,
- la figure 5 superpose les courbes de vitesse et d'enfoncement de pédale d'accélérateur, en cas de forte accélération,
- la figure 6 montre la variation correspondante des tensions dans le circuit,
- la figure 7 montre le cumul des puissances, et
- la figure 8 illustre l'application de l'invention au cas d'un changement de rapport thermique.

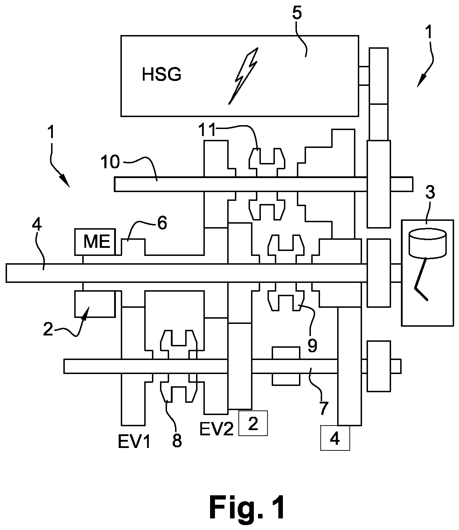

La boîte de vitesses 1 de la figure 1 est par exemple de type « robotisée », c'est-à-dire que son fonctionnement est celui d'une boîte manuelle, mais que les passages de vitesse sont automatisés. Sur le schéma, on a représenté une machine électrique, dite HSG (pour alterno-démarreur haute tension) 5, un moteur thermique 3 sur un arbre primaire plein 4. Une autre machine électrique 2 dite ME, plus puissante que la première, est montée sur un arbre primaire creux 6. L'arbre secondaire 7 de la boîte, est relié au différentiel (non représenté), puis aux roues du véhicule.

Le premier crabot 8, situé sur l'arbre secondaire, 7 permet de modifier le rapport de la machine électrique ME 2, de façon indépendante du reste de la boîte, pour disposer de deux rapports électriques EV1 et EV2. Le deuxième crabot 9, situé sur l'arbre primaire plein 4, permet de modifier le rapport du moteur thermique 3 de façon indépendante des rapports électriques, pour établir deux rapports thermiques Th2 et Th4, indépendamment du rapport électrique. Le troisième crabot 11, situé sur l'arbre de transfert 10, permet d'établir un troisième rapport thermique Th3, lorsqu'il se déplace vers la droite sur le schéma. Il est possible de choisir de façon indépendante, à chaque instant, le rapport voulu sur la première machine électrique ME 2 et celui voulu sur le groupe moteur thermique Mth 3 et la deuxième machine électrique HSG 5. Les combinaisons des rapports thermiques et des rapports électriques permettent de réaliser des rapports hybrides, notés HEVxy, où x désigne le rapport du moteur thermique, et y le rapport de la ME.

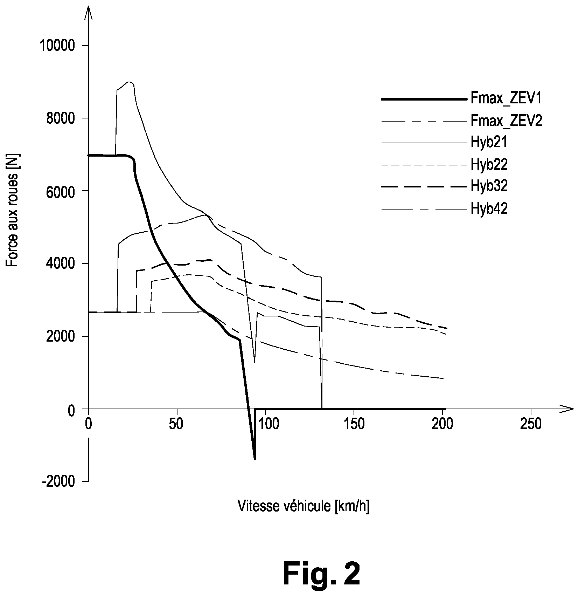

Les courbes de passages de vitesses de la boîte sont regroupées sur la figure 2. La boîte 1 permet d'établir deux rapports électriques ZE1 et ZE2, et quatre rapports hybrides Hyb21, Hyb22, Hyb32, Hyb42, en fonction du « rapport thermique » et du « rapport électrique ». Les courbes tracent les efforts maximum réalisables (force aux roues en Newton) sur les rapports électriques et hybrides, en fonction de la vitesse.

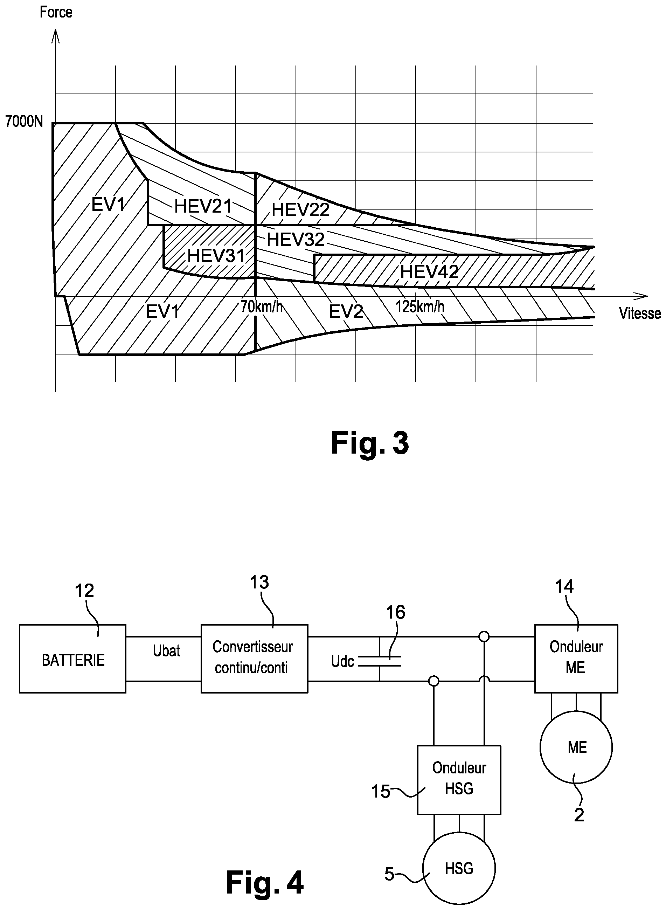

Dans l'application visée, on peut convenir que le rapport cible soit toujours (quelle que soit la vitesse de déplacement) un rapport électrique ZEV, dès lors que ce rapport permet de réaliser la demande de couple du conducteur. Par défaut, le rapport engagé devient le rapport hybride le plus long, permettant de réaliser la demande. Dans cette hypothèse, les rapports demandés peuvent se répartir sur un graphe, comme celui de la figure 3. Cette figure permet d'identifier les changements de rapport susceptibles de se produire au cours d'un roulage classique. On voit qu'en accélération en pied à fond, on passe de HEV22 vers HEV32 autour de 125km/h. Pour ce passage, le deuxième rapport thermique établi doit être déconnecté de la transmission pour synchroniser le moteur thermique sur son nouveau rapport. Avec une tension batterie de 270V, la première machine ME peut fournir une puissance de 35kW. La deuxième machine HSG, peut fournir une puissance de 25kW, tandis que le moteur thermique Mth fournit 70kW. La puissance globale fournie par la boîte à la roue avant le passage, est alors de 105kW. Après le passage, la boîte fournit sensiblement la même puissance (à la variation de la puissance du moteur thermique près. En revanche, pendant le passage, l'ensemble moteur thermique et HSG est déconnecté des roues. Seule la ME, fournit alors de la puissance à la roue, soit 35kW.

Le GMP (Groupe Motopropulseur) souffre d'un trou de puissance, lors de ce passage de vitesse. A 125km/h, la puissance absorbée par l'aérodynamique du véhicule est de l'ordre de 25kW. La puissance disponible pour l'accélération passe en réalité de 80kW à 10kW durant le passage. Une telle chute d'accélération (de 87%), donne au conducteur l'impression que son véhicule n'accélère plus, en dépit du couple fourni par la machine électrique principale ME. Son ressenti est celui d'un véhicule doté d'une boîte de vitesses robotisée à rupture de couple.

La solution à ces problèmes, passe par le contrôle de la puissance disponible sur la chaîne de traction électrique de ce GMP motopropulseur, qui est composé principalement du moteur thermique Mth, des deux machines électriques ME et HSG, et de la batterie d'alimentation des machines électriques, dans lequel la machine principale ME peut transmettre son couple aux roues sur différents rapports de transmission, et la machine électrique secondaire HSG est reliée alternativement aux arbres d'entrée du moteur thermique ou de la machine électrique principale ME.

Comme indiqué plus haut, on souhaite améliorer les performances de la chaîne de traction électrique d'un tel GMP, notamment s'il est monté sur un véhicule hybride non rechargeable. L'objectif est de disposer d'une puissance plus élevée lors d'un roulage prolongé en traction électrique, et d'estomper la rupture de couple ressentie par le conducteur et les usagers du véhicule, pendant les passages de vitesses sur la chaîne de traction thermique.

La solution à ce double problème est mise en évidence sur la figure 4, où l'on voit la batterie de traction 12 du véhicule, reliée par un convertisseur continu/continu 13 aux onduleurs 14, 15, des deux machines électriques ME, HSG, montés en parallèle sur le réseau électrique avec une capacité d'onduleurs 16. Le dispositif de contrôle proposé comporte le convertisseur de [ML3] tension continue 13 disposé entre les bornes de la batterie 12 et celles des machines électriques. Ce convertisseur est capable de leur imposer une tension égale à celle de la batterie Ubat, ou bien une tension Udc plus élevée que celle-ci. Dans ce dispositif, la tension d'alimentation des machines électriques ME, HSG est de préférence régulée par des onduleurs 14, 15, disposés entre le convertisseur 13 et leurs bornes d'entrée. Il comporte aussi de préférence une capacité 16 entre les bornes de sortie du convertisseur. Conformément à ce schéma, l'invention prévoit d'ajouter, entre la batterie de traction et les onduleurs des deux machines électriques, un convertisseur de tension continucontinu, notamment de type élévateur « *step-up* ».

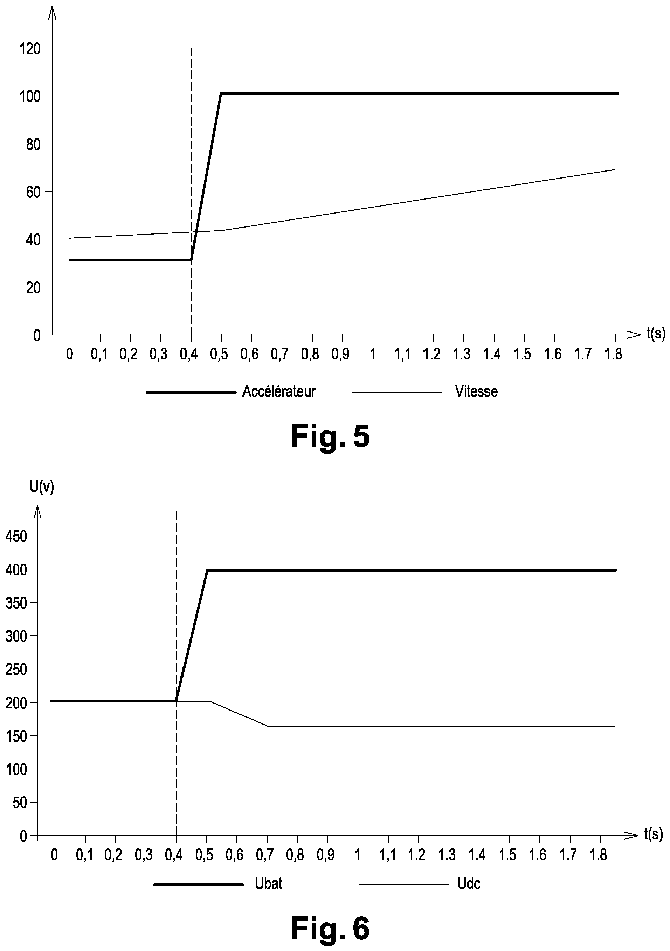

Les figures 5 à 8 illustrent la façon dont l'invention résout le problème puissance lors d'un roulage électrique prolongé en mode « hybride série », où la machine électrique secondaire, entraînée en générateur par le moteur thermique, fournit une puissance électrique d'appoint, à la machine électrique principale.

Quand la demande du conducteur, au travers de sa pédale d'accélérateur, reste faible, la machine électrique principale ME peut assurer seule la traction du véhicule, en étant alimentée à la tension de la batterie 12. Dans cette situation, le convertisseur continu/continu 13 impose aux machines électriques, la tension de la batterie Ubat. La machine secondaire HSG ne fournit pas de puissance.

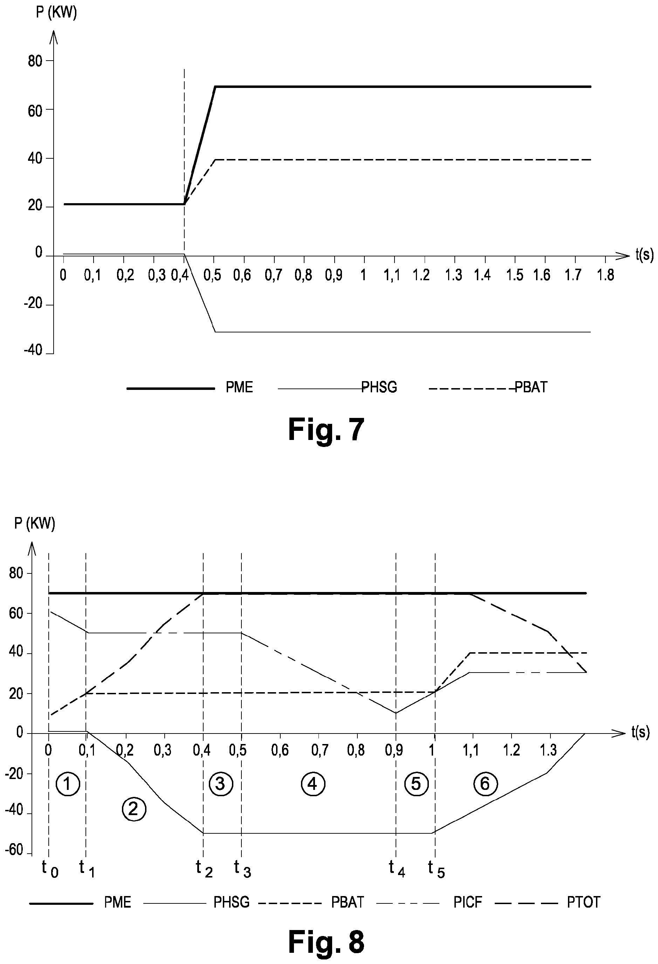

Dès que le conducteur demande une forte accélération (cf. fig. 5), le convertisseur 13 impose au circuit des machines électriques, une tension Udc plus élevée que la tension de batterie Ubat (cf. fig. 6). L'élévation de tension permet d'augmenter le niveau de puissance de génération PHSG de la machine secondaire HSG (fig. 7), dès qu'elle est entraînée en générateur par le moteur thermique. La machine électrique principale ME fournit alors une puissance de traction électrique PM égale à la somme de celle de la batterie PBAT et de la machine électrique secondaire PHSG.

Le convertisseur continu/continu 13 peut aussi imposer aux machines électriques la tension Udc plus élevée que la tension de batterie Ubat, pendant les changements de rapport thermique. La figure 8, illustre la répartition des puissances dans le véhicule lors d'un passage de rapport du type HEV22 vers HEV32 (cf. fig. 2 et 3), dans lequel le régime du moteur thermique baisse de 4500 tr/mn à 3000 tr/mn environ.

La stratégie appliquée pendant un passage se décompose en plusieurs étapes. En référence au cas du passage du deuxième au troisième rapport thermique (Mth2 à Mth3) illustré par les figures, ces étapes sont les suivantes :
- Etape 1, élévation de la tension : dès que le passage est demandé (à to) le convertisseur régule 10la tension à un niveau de l'ordre de 400V ;
- Etape 2, bascule de couple : avant le passage, la puissance est majoritairement assurée par le moteur thermique (PICE) ; ce niveau de puissance thermique est baissé de t₁ à t₂, au niveau maximum que le HSG est capable d'absorber (ici 50KW) : à partir de t₁, le HSG est piloté progressivement en générateur jusqu'à absorber la puissance du moteur thermique (à partir de t₂) ;
- Etape 3, dé-crabotage : à t₂, toute la puissance fournie à la roue est fournie par le moteur électrique, aucun couple ne passe par le crabot, on peut lancer le dé-crabotage du crabot du rapport Th2 ;
- Etape 4, synchronisation du régime moteur thermique : à t₃, on place le GMP en en mode « hybride série » ; en contrôlant à la baisse la puissance du moteur thermique, le couple total appliqué à l'arbre primaire (Moteur thermique + HSG) devient négatif et le régime baisse ;
- Etape 5, crabotage : à t₄, le régime moteur atteint la valeur correspondant au rapport Th3 ; on lance alors le crabotage du crabot correspondant ;
- Etape 6, remise de couple : à t5, une fois le crabot connecté, on réalise une opération symétrique à l'étape 2, en pilotant progressivement le HSG.

En résumé, on a :
- une élévation de la tension Udc par le convertisseur 13, sur le circuit des machines électriques,
- une bascule de couple entre le moteur thermique et la machine électrique secondaire entraînée par celui-ci en générateur,
- le découplage du rapport thermique,
- la synchronisation du régime moteur thermique sur le nouveau rapport à engager,
- le couplage du moteur thermique sur son nouveau rapport,
- la remise de couple sur la chaîne de traction thermique par pilotage progressif de la machine électrique secondaire, et
- une diminution de la tension par le convertisseur sur le circuit des machines électriques.

Au cours du passage, la puissance électrique fournie par le HSG est transmise à la machine électrique principale, qui l'utilise intégralement pour la traction des roues. Sans augmentation de la tension par le convertisseur, la ME n'aurait pas pu disposer de cet apport d'énergie, et le niveau d'accélération aurait baissé du fait de la diminution de la puissance thermique pendant le passage, avant de remonter. Avec l'augmentation temporaire de la tension, le niveau d'accélération reste sensiblement constant.

Le convertisseur de tension peut être intégré dans le même boîtier que les onduleurs ME et HSG, mais il peut aussi être intégré dans le pack de la batterie de traction. Il est alors possible de supprimer les relais de connexion de la batterie, car le convertisseur sait assurer la fonction de connexion/déconnexion de la batterie au réseau. Dans cette configuration, la pré-charge de la capacité des onduleurs, peut être réalisée par le convertisseur.

En conclusion, l'invention se traduit par une élévation transitoire de la tension du réseau haute tension (HT) pendant les passages de vitesses. Grâce à l'invention, la puissance fournie par la première machine électrique principale ME, en mode hybride série, et pendant les changements de rapport de transmission du moteur thermique Mth, est augmentée en faisant fonctionner la deuxième machine électrique HSG en mode régénératif. Toute la puissance électrique de celle-ci est transmise à la première. Elle peut l'utiliser pour augmenter la puissance électrique disponible pour la machine électrique en mode hybride série, ou pour compenser la diminution de couple à la roue, entraînée par le découplage temporaire du moteur thermique.

## Revendications

1. Procédé contrôle de la puissance disponible sur la chaîne de traction électrique d'un groupe motopropulseur (GMP) composé d'un moteur thermique qui peut transmettre son couple aux roues sur différents rapports de transmission, d'une première machine électrique (ME) d'une deuxième machine électrique (HSG) reliée alternativement aux arbres d'entrée du moteur thermique ou de la première machine électrique (ME) dans le groupe motopropulseur (GMP), et d'une batterie d'alimentation (12) des machines électriques, la tension d'alimentation étant établie par un convertisseur de tension continue (13) disposé entre les bornes de la batterie et celles des machines électriques, **caractérisé en ce que** le convertisseur (13) est capable d'imposer aux machines électriques une tension égale à celle de la batterie (Ubat), ou bien une tension (Udc) plus élevée que celle-ci quand le conducteur demande une forte accélération, et pendant les changements de rapport thermique.

2. Procédé de contrôle de puissance selon la revendication 1, **caractérisé en ce que**, quand la demande d'accélération du conducteur au travers de sa pédale d'accélérateur est faible, le convertisseur de tension (13) impose aux machines électriques la tension de la batterie (Ubat).

3. Procédé de contrôle selon la revendication 1 ou 2, **caractérisé en ce que** l'élévation de tension des machines électriques augmente la puissance électrique (PSHG) fournie par la machine électrique secondaire (HSG), lorsqu'elle est entraînée en générateur par le moteur thermique.

4. Procédé de contrôle de puissance selon la revendication 3, **caractérisé en ce que** la machine électrique principale (ME) fournit une puissance de traction électrique (PM) égale à la somme de celle de la batterie (PBAT) et de la machine électrique secondaire (PHSG).

5. Procédé de contrôle de couple selon l'une des revendications précédentes, **caractérisé en ce qu'**il comporte les étapes suivantes :
- élévation de la tension (Udc) par le convertisseur (13), sur le circuit des machines électriques,
- bascule de couple entre le moteur thermique et la machine électrique secondaire entraînée par celui-ci en générateur,
- découplage du rapport thermique,
- synchronisation du régime moteur thermique sur le nouveau rapport à engager,
- couplage du moteur thermique sur son nouveau rapport,
- remise de couple sur la chaîne de traction thermique par pilotage progressif de la machine électrique secondaire (HSG), et
- diminution de la tension par le convertisseur (13) sur le circuit des machines électriques.

6. Dispositif de contrôle de la puissance disponible sur la chaîne de traction électrique d'un groupe motopropulseur (GMP) composé d'un moteur thermique (3) qui peut transmettre son couple aux roues sur différents rapports de transmission, d'une première machine électrique (ME) d'une deuxième machine électrique (HSG) reliée alternativement aux arbres d'entrée du moteur thermique ou de la première machine électrique (ME) dans le groupe motopropulseur (GMP), et d'une batterie d'alimentation (12) des machines électriques, un convertisseur de tension continue (13) étant disposé entre les bornes de la batterie et celles des machines électriques, **caractérisé en ce que** le convertisseur de tension est capable d'imposer aux machines électriques une tension égale à celle de la batterie (Ubat), ou bien une tension (Udc) plus élevée que celle-ci quand le conducteur demande une forte accélération et pendant les changements de rapport thermique.

7. Dispositif de contrôle de puissance selon la revendication 6, **caractérisé en ce que** la tension d'alimentation des machines électriques (ME, HSG) est régulée par des onduleurs (14, 15), disposés entre le convertisseur (13) et leurs bornes d'entrée.

8. Dispositif de contrôle de puissance selon la revendication 7, **caractérisé en ce qu'**il comporte une capacité (16) entre les bornes de sortie du convertisseur (13).

## Patentansprüche

1. Verfahren zur Steuerung der verfügbaren Leistung am Elektroantrieb eines Antriebsstrangs (GMP), der aus einem Verbrennungsmotor, der sein Drehmoment über verschiedene Übersetzungsverhältnisse an die Räder übertragen kann, einer ersten elektrischen Maschine (ME) einer zweiten elektrischen Maschine (HSG), die abwechselnd mit den Eingangswellen des Verbrennungsmotors oder der ersten elektrischen Maschine (ME) in dem Antriebsstrang (GMP) verbunden ist, und einer Batterie zur Stromversorgung (12) der elektrischen Maschinen gebildet ist, wobei die Versorgungsspannung durch einen Gleichspannungswandler (13) hergestellt wird, der zwischen den Anschlüssen der Batterie und jenen der elektrischen Maschinen angeordnet ist, **dadurch gekennzeichnet, dass** der Wandler (13) geeignet ist, den elektrischen Maschinen eine Spannung aufzuerlegen, die gleich jener der Batterie (Ubat) ist, oder eine Spannung (Udc), die höher als diese ist, wenn der Fahrer eine starke Beschleunigung anfordert und während der Verbrennungsgangwechsel.

2. Leistungssteuerungsverfahren nach Anspruch 1, **dadurch gekennzeichnet, dass**, wenn die Beschleunigungsanforderung des Fahrers durch sein Gaspedal gering ist, der Spannungswandler (13) den elektrischen Maschinen die Spannung der Batterie (Ubat) auferlegt.

3. Steuerungsverfahren nach Anspruch 1 oder 2, **dadurch gekennzeichnet, dass** die Spannungsanhebung der elektrischen Maschinen die elektrische Leistung (PSHG) erhöht, die durch die sekundäre elektrische Maschine (HSG) bereitgestellt wird, wenn sie durch den Verbrennungsmotor als Generator angetrieben wird.

4. Leistungssteuerungsverfahren nach Anspruch 3, **dadurch gekennzeichnet, dass** die hauptsächliche elektrische Maschine (ME) eine elektrische Traktionsleistung (PM) bereitstellt, die gleich der Summe jener der Batterie (PBAT) und der sekundären elektrischen Maschine (PHSG) ist.

5. Drehmomentsteuerungsverfahren nach einem der vorhergehenden Ansprüche , **dadurch gekennzeichnet, dass** es die folgenden Schritte umfasst:
- Anheben der Spannung (Udc) durch den Wandler (13) auf der Schaltung der elektrischen Maschinen,
- Kippen des Drehmoments zwischen dem Verbrennungsmotor und der sekundären elektrischen Maschine, die durch diesen als Generator angetrieben wird,
- Auskuppeln des Verbrennungsgangs,
- Synchronisieren der Verbrennungsmotordrehzahl mit dem neuen einzulegenden Gang,
- Kuppeln des Verbrennungsmotors in seinen neuen Gang,
- Wiederanlegen von Drehmoment an den Verbrennungsantrieb durch progressive Steuerung der sekundären elektrischen Maschine (HSG), und
- Absenken der Spannung durch den Wandler (13) auf der Schaltung der elektrischen Maschinen.

6. Vorrichtung zur Steuerung der verfügbaren Leistung am Elektroantrieb eines Antriebsstrangs (GMP), der aus einem Verbrennungsmotor (3), der sein Drehmoment über verschiedene Übersetzungsverhältnisse an die Räder übertragen kann, einer ersten elektrischen Maschine (ME) einer zweiten elektrischen Maschine (HSG), die abwechselnd mit den Eingangswellen des Verbrennungsmotors oder der ersten elektrischen Maschine (ME) in dem Antriebsstrang (GMP) verbunden ist, und einer Batterie zur Stromversorgung (12) der elektrischen Maschinen gebildet ist, wobei ein Gleichspannungswandler (13) zwischen den Anschlüssen der Batterie und jenen der elektrischen Maschinen angeordnet ist, **dadurch gekennzeichnet, dass** der Spannungswandler geeignet ist, den elektrischen Maschinen eine Spannung aufzuerlegen, die gleich jener der Batterie (Ubat) ist, oder eine Spannung (Udc), die höher als diese ist, wenn der Fahrer eine starke Beschleunigung anfordert und während der Verbrennungsgangwechsel.

7. Leistungssteuerungsvorrichtung nach Anspruch 6, **dadurch gekennzeichnet, dass** die Versorgungsspannung der elektrischen Maschinen (ME, HSG) durch Wechselrichter (14, 15) geregelt wird, die zwischen dem Wandler (13) und ihren Eingangsanschlüssen angeordnet sind.

8. Leistungssteuerungsvorrichtung nach Anspruch 7, **dadurch gekennzeichnet, dass** sie eine Kapazität (16) zwischen den Ausgangsanschlüssen des Wandlers (13) aufweist.

## Claims

1. A method for controlling the power available on the electric traction chain of a powertrain (GMP) consisting of a combustion engine that can transmit the torque thereof to the wheels over various transmission ratios, of a first electric machine (ME) of a second electric machine (HSG) linked alternately to the input shafts of the combustion engine or of the first electric machine (ME) in the powertrain (GMP), and of a supply battery (12) for the electric machines, the supply voltage being established by a DC voltage converter (13) arranged between the terminals of the battery and those of the electric machines, **characterized in that** the converter (13) can impose, on the electric machines, a voltage equal to that of the battery (Ubat), or a voltage (Udc) that is greater than this when the driver requests a strong acceleration, and during the combustion ratio changes.

2. Power control method according to Claim 1, **characterized in that**, when the acceleration request of the driver through the accelerator pedal thereof is weak, the voltage converter (13) imposes the voltage of the battery (Ubat) on the electric machines.

3. Control method according to Claim 1 or 2, **characterized in that** the rise in voltage of the electric machines increases the electric power (PSHG) provided by the secondary electric machine (HSG), when it is driven as a generator by the combustion engine.

4. Power control method according to Claim 3, **characterized in that** the main electric machine (ME) provides an electric traction power (PM) equal to the sum of that of the battery (PBAT) and of the secondary electric machine (PHSG).

5. Torque control method according to one of the preceding claims, **characterized in that** it includes the following steps:
- increase in the voltage (Udc) via the converter (13), on the circuit of the electric machines,
- transfer of torque between the combustion engine and the secondary electric machine driven thereby as a generator,
- decoupling of the combustion ratio,
- synchronization of the combustion engine speed with the new ratio to be engaged,
- coupling of the combustion engine to the new ratio thereof,
- restoration of torque on the combustion traction chain by progressively driving the secondary electric machine (HSG), and
- decrease in the voltage via the converter (13) on the circuit of the electric machines.

6. Device for controlling the power available on the electric traction chain of a powertrain (GMP) consisting of a combustion engine (3) that can transmit the torque thereof to the wheels over various transmission ratios, of a first electric machine (ME) of a second electric machine (HSG) linked alternately to the input shafts of the combustion engine or of the first electric machine (ME) in the powertrain (GMP), and of a supply battery (12) for the electric machines, a DC voltage converter (13) being arranged between the terminals of the battery and those of the electric machines, **characterized in that** the voltage converter can impose, on the electric machines, a voltage equal to that of the battery (Ubat), or a voltage (Udc) that is greater than this when the driver requests a strong acceleration and during the combustion ratio changes.

7. Power control device according to Claim 6, **characterized in that** the supply voltage for the electric machines (ME, HSG) is regulated by inverters (14, 15), which are arranged between the converter (13) and the input terminals thereof.

8. Power control device according to Claim 7, **characterized in that** it includes a capacitor (16) between the output terminals of the converter (13).
